(19) **Europäisches Patentamt European Patent Office Office européen des brevets**

(11) **EP 4 700 085 A1**

(12) **EUROPEAN PATENT APPLICATION**
published in accordance with Art. 153(4) EPC

(43) Date of publication:
**25.02.2026 Bulletin 2026/09**

(21) Application number: **24879946.2**

(22) Date of filing: **30.08.2024**

(51) International Patent Classification (IPC):
*C08L 51/04* (2006.01)      *C08L 51/00* (2006.01)
*C08L 25/12* (2006.01)      *C08L 67/02* (2006.01)
*C08G 63/672* (2006.01)      *C08J 5/18* (2006.01)

(52) Cooperative Patent Classification (CPC):
**C08G 63/672; C08J 5/18; C08L 25/12; C08L 51/00; C08L 51/04; C08L 67/02**

(86) International application number:
**PCT/KR2024/013025**

(87) International publication number:
**WO 2025/084606 (24.04.2025 Gazette 2025/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **18.10.2023   KR 20230139390**
        **26.08.2024   KR 20240114660**

(71) Applicant: **LG CHEM, LTD.**
        **Seoul 07336 (KR)**

(72) Inventors:
 • **AN, Yong Hee**
   **Daejeon 34122 (KR)**

 • **KIM, Seo Hwa**
   **Daejeon 34122 (KR)**
 • **CHO, Yun Kyoung**
   **Daejeon 34122 (KR)**
 • **PARK, Chun Ho**
   **Daejeon 34122 (KR)**
 • **KIM, Ho Hoon**
   **Daejeon 34122 (KR)**
 • **JANG, Jeongmin**
   **Daejeon 34122 (KR)**
 • **HWANG, Hyeri**
   **Daejeon 34122 (KR)**

(74) Representative: **Plasseraud IP**
        **104 Rue de Richelieu**
        **CS92104**
        **75080 Paris Cedex 02 (FR)**

(54) **THERMOPLASTIC RESIN COMPOSITION, METHOD FOR PRODUCING SAME, AND MOLDED ARTICLE INCLUDING SAME**

(57)   The present invention relates to a thermoplastic resin composition, a method of preparing the same, and a molded article including the same. More particularly, the present invention relates to a thermoplastic resin composition including 100 parts by weight of a base resin including 46 to 81 % by weight of an alkyl acrylate-aromatic vinyl compound-vinyl cyanide compound graft copolymer (A) containing an alkyl acrylate rubber having an average particle diameter of 50 to 150 nm, and 19 to 54 % by weight of an aromatic vinyl compound-vinyl cyanide compound copolymer (B) including 10 % by weight or more and less than 26 % by weight of a vinyl cyanide compound and having a weight average molecular weight of 65,000 to 110,000 g/mol; and 3 parts by weight or more of a thermoplastic polyester elastomer (C), wherein the thermoplastic resin composition has an alkyl acrylate coverage value (X) of 65 % by weight or more as calculated by Equation 1, a method of preparing the thermoplastic resin composition, and a molded article including the thermoplastic resin composition.

According to the present invention, the present invention has an effect of providing a thermoplastic resin composition having excellent mechanical properties, processability, and weather resistance; being capable of providing an aesthetically pleasing appearance due to excellent low-whitening characteristics even in a thick sheet; being applicable to unpainted sheets; and thus having excellent economics and eco-friendliness, a method of preparing the thermoplastic resin composition, and a molded article including the thermoplastic resin composition.

[FIG. 1]

Example 1                    Comparative Example 1

**Description**

[Technical Field]

[Cross-Reference to Related Applications]

This application claims priority to Korean Patent Application No. 10-2023-0139390, filed on October 18, 2023, and Korean Patent Application No. 10-2024-0114660, re-filed on August 26, 2024, based on the priority of the above patent, in the Korean Intellectual Property Office, the disclosures of each of which are incorporated herein by reference.

The present invention relates to a thermoplastic resin composition, a method of preparing the same, and a molded article including the same, and more particularly, to a thermoplastic resin composition having excellent mechanical properties, weather resistance, processability, and low-whitening characteristics; having an aesthetically pleasing appearance; being applicable to unpainted molded articles; and thus having excellent economics and eco-friendliness, a method of preparing the thermoplastic resin composition, and a molded article including the thermoplastic resin composition.

[Background Art]

In general, an acrylonitrile-styrene-acrylate copolymer (hereinafter referred to as 'ASA resin') containing an alkyl (meth)acrylate-based compound does not contain ethylene-based unsaturated bonds and thus has excellent properties such as processability, impact resistance, chemical resistance, and weather resistance. Accordingly, the ASA resin has been used in a variety of fields, including building materials, interior and exterior materials for vehicles including automobiles and motorcycles, electrical and electronic products, ships, leisure goods, and gardening supplies. Also, demand for the ASA resin is increasing rapidly.

In addition, as the market demands for emotional quality and the aesthetic level of consumers increase, products with a luxurious appearance, excellent colorability, and weather resistance are being realized by finishing the outer surface of materials such as ABS, PVC, and iron plates with an ASA resin. These finishing materials are manufactured in the form of a film and are manufactured into a final product through a bending process such as bending or folding according to the shape of a substrate.

However, due to the characteristics of thermoplastic ASA resin, when the above finishing treatment is performed at room temperature, a whitening phenomenon occurs, causing the original color to be lost and the appearance quality to deteriorate. This whitening phenomenon occurs due to pores within the ASA resin, and the whitening phenomenon becomes more severe as the thickness of a film or sheet increases.

In addition, in the furniture and architectural finishing materials markets, unpainted molded articles are constantly in demand due to environmental friendliness and low production costs thereof. In addition, the need for thick sheets is increasing to improve the hiding power of a substrate and to mask external defects such as foreign substances and unevenness of an underlying substrate.

Accordingly, there is a need for the development of a material having excellent processability and mechanical properties, having low-whitening characteristics despite the large thickness thereof, and being capable of providing eco-friendliness and an aesthetically pleasing appearance when applied to unpainted sheets.

[Related Art Documents]

[Patent Documents]

KR 2009-0095764 A

[Disclosure]

[Technical Problem]

Therefore, the present invention has been made in view of the above problems, and it is one object of the present invention to provide a thermoplastic resin composition having excellent mechanical properties, weather resistance, and processability; being capable of providing an aesthetically pleasing appearance due to excellent low-whitening characteristics thereof despite the large thickness thereof; and being applicable to an unpainted sheet and an all-in-one product with no joints between a substrate and the product.

It is another object of the present invention to provide a method of preparing the thermoplastic resin composition.

It is yet another object of the present invention to provide a molded article including the thermoplastic resin composition.

The above and other objects can be accomplished by the present invention described below.

[Technical Solution]

I) In accordance with one aspect of the present invention, provided is a thermoplastic resin composition including 100 parts by weight of a base resin including 46 to 81 % by weight of a copolymer (A) including an alkyl acrylate rubber having an average particle diameter of 50 to 150 nm, an aromatic vinyl compound, and a vinyl cyanide compound, and 19 to 54 % by weight of an aromatic vinyl compound-vinyl cyanide compound copolymer (B) having a weight average molecular weight of 65,000 to 110,000 g/mol; and 3 parts by weight or more of a thermoplastic polyester elastomer (C), wherein the thermoplastic resin composition has an alkyl acrylate coverage value (X) of 65 % by weight or more as calculated by Equation 1 below.

$$[Equation\ 1]$$

$$X = \{(G-Y)/Y\} \times 100,$$

wherein G represents a gel content (wt%) based on a total weight of the thermoplastic resin composition, and Y represents an alkyl acrylate content (wt%) in gel based on a total weight of the thermoplastic resin composition.

II) In accordance with another aspect of the present invention, provided is a thermoplastic resin composition including 100 parts by weight of a base resin including 46 to 81 % by weight of an alkyl acrylate-aromatic vinyl compound-vinyl cyanide compound graft copolymer (A) containing an alkyl acrylate rubber having an average particle diameter of 50 to 150 nm, and 19 to 54 % by weight of an aromatic vinyl compound-vinyl cyanide compound copolymer (B) having a weight average molecular weight of 65,000 to 110,000 g/mol; and 3 parts by weight or more of a thermoplastic polyester elastomer (C), wherein the thermoplastic resin composition has an alkyl acrylate coverage value (X) of 65 % by weight or more as calculated by Equation 1 below.

$$[Equation\ 1]$$

$$X = \{(G-Y)/Y\} \times 100,$$

wherein G represents a gel content (wt%) based on a total weight of the thermoplastic resin composition, and Y represents an alkyl acrylate content (wt%) in gel based on a total weight of the thermoplastic resin composition.

III) In accordance with still another aspect of the present invention, provided is a thermoplastic resin composition including 100 parts by weight of a base resin including 46 to 81 % by weight of an alkyl acrylate-aromatic vinyl compound-vinyl cyanide compound graft copolymer (A) containing an alkyl acrylate rubber having an average particle diameter of 50 to 150 nm, and 19 to 54 % by weight of an aromatic vinyl compound-vinyl cyanide compound copolymer (B) having a weight average molecular weight of 65,000 to 110,000 g/mol; and 3 parts by weight or more of a thermoplastic polyester elastomer (C).

IV) In accordance with still another aspect of the present invention, provided is a thermoplastic resin composition including 100 parts by weight of a base resin including 46 to 81 % by weight of an alkyl acrylate-aromatic vinyl compound-vinyl cyanide compound graft copolymer (A) containing an alkyl acrylate rubber having an average particle diameter of 50 to 150 nm, and 19 to 54 % by weight of an aromatic vinyl compound-vinyl cyanide compound copolymer (B) including 10 % by weight or more and less than 26 % by weight of a vinyl cyanide compound and having a weight average molecular weight of 65,000 to 110,000 g/mol; and 3 parts by weight or more of a thermoplastic polyester elastomer (C), wherein the thermoplastic resin composition has an alkyl acrylate coverage value (X) of 65 % by weight or more as calculated by Equation 1 below.

[Equation 1]

$$X = \{(G-Y)/Y\} \times 100,$$

wherein G represents a gel content (wt%) based on a total weight of the thermoplastic resin composition, and Y represents an alkyl acrylate content (wt%) in gel based on a total weight of the thermoplastic resin composition.

V) According to I) to IV), based on a total weight thereof, the graft copolymer (A) may preferably include 20 to 60 % by weight of an alkyl acrylate rubber and 40 to 80 % by weight of an aromatic vinyl compound-vinyl cyanide compound copolymer surrounding the alkyl acrylate rubber.

VI) According to I) to V), the graft copolymer (A) may preferably have a grafting degree of 60 % or more as calculated by Equation 2 below.

Grafting degree (%) = [Weight (g) of grafted monomers/Rubber weight (g)] $\times$ 100          [Equation 2]

In Equation 2, the weight (g) of grafted monomers is obtained by subtracting the rubber weight (g) from a weight of insoluble matter (gel) obtained by dissolving a graft copolymer in acetone and performing centrifugation, and the rubber weight (g) is a weight (g) of rubber components theoretically added to graft copolymer powder.

VII) According to I) to VI), the thermoplastic polyester elastomer (C) may preferably have a melt flow rate of 0.5 to 10 g/10 min as measured at a temperature of 230 °C under a load of 2.16 kg according to ASTM D1238.

VIII) According to I) to VII), the thermoplastic polyester elastomer (C) may be preferably an elastomer including an aromatic dicarboxylic acid or an ester derivative thereof; an aliphatic diol; and a polyalkylene oxide.

IX) According to I) to VIII), the aromatic dicarboxylic acid may preferably include one or more selected from the group consisting of terephthalic acid, isophthalic acid, 2,6-naphthalene dicarboxylic acid, 1,5-naphthalene dicarboxylic acid, and 1,4-cyclohexane dicarboxylic acid.

X) According to I) to IX), the aliphatic diol may preferably include one or more selected from the group consisting of ethylene glycol, propylene glycol, 1,2-propanediol, 1,3-propanediol, 1,4-butanediol, 1,5-pentanediol, 1,6-hexanediol, and 1,4-cyclohexanedimethanol.

XI) According to I) to X), the polyalkylene oxide may preferably include one or more selected from the group consisting of polyethylene glycol, polypropylene glycol, polytetramethylene glycol, polyhexamethylene glycol, a copolymer of ethylene oxide and propylene oxide, an ethylene oxide addition polymer of polypropylene glycol, and a copolymer of ethylene oxide and tetrahydrofuran.

XII) According to I) to XI), after cupping a central portion of a sheet having a thickness of 0.3 mm at a speed of 10 mm/min to a depth of 8 mm using a 20 mm diameter ball and an electric Erichsen cupping tester, when values before and after cupping are measured using a color difference meter, and a color difference ($\triangle$E) is calculated by Equation 3 below, the thermoplastic resin composition may preferably have a color difference ($\triangle$E) of 2.0 or less.

[Equation 3]

$$\Delta E = \sqrt{(L'-L_0)^2 + (a'-a_0)^2 + (b'-b_0)^2}$$

In Equation 3, L', a', and b' represent L, a, and b values measured using a CIE LAB color coordinate system after cupping, respectively, and $L_0$, $a_0$, and $b_0$ represent L, a, and b values measured using the CIE LAB color coordinate system before cupping.

XIII) According to I) to XII), the thermoplastic resin composition may preferably have a Rockwell hardness of 44 or more as measured in an R-scale according to ASTM D785.

XIV) In accordance with still another aspect of the present invention, provided is a method of preparing a thermoplastic resin composition, the method including kneading and extruding, at 200 to 300 °C and 100 to 500 rpm, 100 parts by weight of a base resin including 46 to 81 % by weight of an alkyl acrylate-aromatic vinyl compound-vinyl cyanide compound graft copolymer (A) containing an alkyl acrylate rubber having an average particle diameter of 50 to 150 nm, and 19 to 54 % by weight of an aromatic vinyl compound-vinyl cyanide compound copolymer (B) including 10 % by weight or more and less than 26 % by weight of a vinyl cyanide compound and having a weight average molecular weight of 65,000 to 110,000 g/mol; and 3 parts by weight or more of a thermoplastic polyester elastomer (C), wherein the thermoplastic resin composition has an alkyl acrylate coverage value (X) of 65 % by weight or more as calculated by Equation 1 below.

$$[\text{Equation 1}]$$

$$X = \{(G-Y)/Y\} \times 100,$$

wherein G represents a gel content (wt%) based on a total weight of the thermoplastic resin composition, and Y represents an alkyl acrylate content (wt%) in gel based on a total weight of the thermoplastic resin composition.

XV) In accordance with yet another aspect of the present invention, provided is a molded article including the thermoplastic resin composition according to any one of I) to XIII).

XVI) According to XV), the molded article may be an unpainted sheet.

[Advantageous Effects]

According to the present invention, the present invention has an effect of providing a thermoplastic resin composition having excellent mechanical properties, weather resistance, and processability; being capable of providing an aesthetically pleasing appearance due to excellent low-whitening characteristics thereof despite the large thickness thereof; and being applicable to an unpainted sheet and an all-in-one product with no joints between a substrate and the product, a method of preparing the thermoplastic resin composition, and a molded article including the thermoplastic resin composition. In particular, according to the present invention, a thick sheet has excellent low-whitening characteristics, thereby improving the hiding power of a substrate and providing a masking effect for poor appearance such as foreign substances and unevenness of an underlying substrate, thereby improving appearance quality and emotional quality.

In addition, the thermoplastic resin composition of the present invention has the advantages of reduced production cost and eco-friendliness as the thermoplastic resin composition can be easily applied to unpainted molded articles, especially unpainted sheets.

[Description of Drawings]

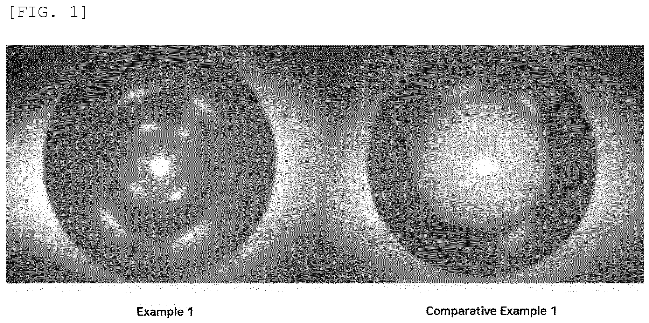

FIG. 1 includes images of cupped sheets obtained after cupping sheets manufactured in Example 1 and Comparative Example 1 using an electric Erichsen cupping tester.

[Best Mode]

Hereinafter, a thermoplastic resin composition of the present invention, a method of preparing the same, and a molded article including the same are described in detail.

The present inventors confirmed that, when a base resin including an alkyl acrylate-aromatic vinyl compound-vinyl cyanide compound graft copolymer containing rubber having a predetermined average particle diameter and an aromatic vinyl compound-vinyl cyanide compound copolymer including a vinyl cyanide compound in a predetermined content and having a weight average molecular weight within a given range and a thermoplastic polyester elastomer in a predetermined content were included, and an alkyl acrylate coverage value of a thermoplastic resin composition was adjusted within a predetermined range, by reducing the occurrence of whitening when bending thick sheets, an aesthetically pleasing appearance was realized, and the balance between mechanical properties, weather resistance, and processability was improved. Based on these findings, the present inventors conducted further study to complete the present invention.

A thermoplastic resin composition according to the present invention is described in detail below.

The thermoplastic resin composition of the present invention includes 100 parts by weight of a base resin including 46 to 81 % by weight of a copolymer (A) including an alkyl acrylate rubber having an average particle diameter of 50 to 150 nm, an aromatic vinyl compound, and a vinyl cyanide compound, and 19 to 54 % by weight of an aromatic vinyl compound-vinyl cyanide compound copolymer (B) having a weight average molecular weight of 65,000 to 110,000 g/mol; and 3 parts by weight or more of a thermoplastic polyester elastomer (C). The thermoplastic resin composition has an alkyl acrylate coverage value (X) of 65 % by weight or more as calculated by Equation 1 below. In this case, the thermoplastic resin composition may have excellent mechanical properties, weather resistance, and processability, may provide an aesthetically pleasing appearance due to excellent low-whitening characteristics thereof despite the large thickness thereof, and may be applicable to an unpainted sheet and an all-in-one product with no joints between a substrate and the product.

[Equation 1]

$$X = \{(G-Y)/Y\} \times 100$$

In Equation 1, G represents a gel content (wt%) based on a total weight of the thermoplastic resin composition, and Y represents an alkyl acrylate content (wt%) in gel based on a total weight of the thermoplastic resin composition.

For example, the copolymer (A) may be an alkyl acrylate-aromatic vinyl compound-vinyl cyanide compound graft copolymer (A) containing an alkyl acrylate rubber having an average particle diameter of 50 to 150 nm. In this case, mechanical properties, weather resistance, and processability may be excellent, and the occurrence of whitening during a bending processing may be reduced.

In addition, the thermoplastic resin composition of the present invention includes 100 parts by weight of a base resin including 46 to 81 % by weight of an alkyl acrylate-aromatic vinyl compound-vinyl cyanide compound graft copolymer (A) containing an alkyl acrylate rubber having an average particle diameter of 50 to 150 nm, and 19 to 54 % by weight of an aromatic vinyl compound-vinyl cyanide compound copolymer (B) having a weight average molecular weight of 65,000 to 110,000 g/mol; and 3 parts by weight or more of a thermoplastic polyester elastomer (C). The thermoplastic resin composition has an alkyl acrylate coverage value (X) of 65 % by weight or more as calculated by Equation 1 below. In this case, the thermoplastic resin composition may have excellent mechanical properties, weather resistance, and processability, may provide an aesthetically pleasing appearance due to excellent low-whitening characteristics thereof despite the large thickness thereof, and may be applicable to an unpainted sheet and an all-in-one product with no joints between a substrate and the product.

[Equation 1]

$$X = \{(G-Y)/Y\} \times 100$$

In Equation 1, G represents a gel content (wt%) based on a total weight of the thermoplastic resin composition, and Y represents an alkyl acrylate content (wt%) in gel based on a total weight of the thermoplastic resin composition.

In addition, the thermoplastic resin composition of the present invention includes 100 parts by weight of a base resin including 46 to 81 % by weight of an alkyl acrylate-aromatic vinyl compound-vinyl cyanide compound graft copolymer (A) containing an alkyl acrylate rubber having an average particle diameter of 50 to 150 nm, and 19 to 54 % by weight of an aromatic vinyl compound-vinyl cyanide compound copolymer (B) having a weight average molecular weight of 65,000 to 110,000 g/mol; and 3 parts by weight or more of a thermoplastic polyester elastomer (C). In this case, the thermoplastic resin composition may have excellent mechanical properties, weather resistance, and processability, may provide an aesthetically pleasing appearance due to excellent low-whitening characteristics thereof despite the large thickness thereof, and may be applicable to an unpainted sheet and an all-in-one product with no joints between a substrate and the product.

In addition, the thermoplastic resin composition of the present invention includes 100 parts by weight of a base resin including 46 to 81 % by weight of an alkyl acrylate-aromatic vinyl compound-vinyl cyanide compound graft copolymer (A) containing an alkyl acrylate rubber having an average particle diameter of 50 to 150 nm, and 19 to 54 % by weight of an aromatic vinyl compound-vinyl cyanide compound copolymer (B) including 10 % by weight or more and less than 26 % by weight of a vinyl cyanide compound and having a weight average molecular weight of 65,000 to 110,000 g/mol; and 3 parts by weight or more of a thermoplastic polyester elastomer (C). The thermoplastic resin composition has an alkyl acrylate coverage value (X) of 65 % by weight or more as calculated by Equation 1 below. In this case, the thermoplastic resin composition may have excellent mechanical properties, weather resistance, and processability, may provide an aesthetically pleasing appearance due to excellent low-whitening characteristics thereof despite the large thickness thereof, and may be applicable to an unpainted sheet and an all-in-one product with no joints between a substrate and the product.

[Equation 1]

$$X = \{(G-Y)/Y\} \times 100$$

In Equation 1, G represents a gel content (wt%) based on a total weight of the thermoplastic resin composition, and Y represents an alkyl acrylate content (wt%) in gel based on a total weight of the thermoplastic resin composition.

Hereinafter, each component of the thermoplastic resin composition of the present invention will be described in detail.

**(A) Alkyl acrylate-aromatic vinyl compound-vinyl cyanide compound graft copolymer containing alkyl acrylate rubber having average particle diameter of 50 to 150 nm**

For example, based on a total weight of the base resin, the graft copolymer (A) may be included in an amount of 46 to 81 % by weight, preferably 50 to 77 % by weight, more preferably 57 to 74 % by weight, still more preferably 65 to 73 % by weight. Within this range, mechanical properties and transparency may be excellent, and low-whitening characteristics may be excellent even at a large thickness.

The graft copolymer (A) may be preferably composed of an alkyl acrylate rubber (core) and an aromatic vinyl compound-vinyl cyanide compound copolymer (shell) surrounding the core.

For example, based on a total weight thereof, the graft copolymer (A) may include 20 to 60 % by weight of an alkyl acrylate rubber and 40 to 80 % by weight of an aromatic vinyl compound-vinyl cyanide compound copolymer surrounding the alkyl acrylate rubber, preferably 30 to 50 % by weight of an alkyl acrylate rubber and 50 to 70 % by weight of an aromatic vinyl compound-vinyl cyanide compound copolymer surrounding the alkyl acrylate rubber, more preferably 40 to 50 % by weight of an alkyl acrylate rubber and 50 to 60 % by weight of an aromatic vinyl compound-vinyl cyanide compound copolymer surrounding the alkyl acrylate rubber. Within this range, mechanical properties, weather resistance, and processability may be excellent, and the occurrence of whitening during a bending processing may be reduced.

For example, the alkyl acrylate rubber may have an average particle diameter of 50 to 150 nm, more preferably 60 to 140 nm, still more preferably 70 to 140 nm, still more preferably 80 to 130 nm, still more preferably 90 to 130 nm. Within this range, the thermoplastic resin composition finally prepared may be provided with excellent permeability and gloss.

In the present disclosure, the average particle diameter is measured by dynamic light scattering. Specifically, the average particle diameter is measured as an intensity value using a Nicomp 380 particle size analyzer (manufacturer: PSS) in a Gaussian mode. As a specific measurement example, a sample is prepared by diluting 0.1 g of latex (total solids content: 35 to 50 wt%) 1,000 to 5,000-fold with distilled water. Then, the average particle diameter of the sample is measured using a flow cell in auto-dilution in a measurement mode of dynamic light scattering/intensity 300 kHz/intensity-weight Gaussian analysis. At this time, setting values are as follows: temperature: 23 °C, measurement wavelength: 632.8 nm, and channel width: 10 $\mu$sec.

For example, the alkyl acrylate rubber may be prepared by performing emulsion polymerization of an alkyl acrylate, preferably by mixing an alkyl acrylate, an emulsifier, an initiator, a grafting agent, a crosslinking agent, an electrolyte, and a solvent and performing emulsion polymerization of the mixture. In this case, due to excellent grafting efficiency, mechanical properties may be excellent.

For example, the alkyl acrylate rubber may further include an aromatic vinyl compound. In this case, chemical resistance and impact resistance may be further improved.

For example, based on 100 % by weight in total of the alkyl acrylate rubber, the alkyl acrylate rubber may include the aromatic vinyl compound in an amount of 0.1 to 25 % by weight, preferably 2 to 23 % by weight, more preferably 5 to 20 % by weight. Within this range, impact resistance, gloss, transparency, and weather resistance may be excellent without deterioration of physical properties, and change over time may be reduced.

For example, the alkyl acrylate rubber may include a seed, preferably a rubber seed.

For example, based on 100 % by weight of the graft copolymer (A), the seed may be prepared by polymerizing 1 to 20 % by weight, preferably 2 to 15 % by weight, more preferably 3 to 10 % by weight of one or more monomers selected from the group consisting of an aromatic vinyl compound, a vinyl cyanide compound, and an alkyl acrylate. Within this range, impact strength, weather resistance, and physical property balance may be excellent.

For example, the aromatic vinyl compound-vinyl cyanide compound copolymer (shell) may have a weight average molecular weight of 40,000 to 120,000 g/mol, preferably 50,000 to 110,000 g/mol, more preferably 60,000 to 110,000 g/mol. Within this range, processability may be excellent without deterioration of impact strength, and the occurrence of whitening may be reduced during a bending processing.

In the present disclosure, unless otherwise defined, the weight average molecular weight may be measured using gel permeation chromatography (GPC, Waters Breeze). As a specific example, the weight average molecular weight may be measured using tetrahydrofuran (THF) as an eluate through gel permeation chromatography (GPC, Waters Breeze). In this case, weight average molecular weight is obtained as a relative value to a polystyrene (PS) standard sample. As a specific measurement example, the weight average molecular weight may be measured under conditions of solvent: THF, column temperature: 40 °C, flow rate: 0.3 ml/min, sample concentration: 20 mg/ml, injection amount: 5 $\mu$l, column model: 1$\times$ PLgel 10 $\mu$m MiniMix-B (250 $\times$ 4.6 mm) + 1$\times$ PLgel 10 $\mu$m MiniMix-B (250 $\times$ 4.6 mm) + 1$\times$ PLgel 10 $\mu$m MiniMix-B Guard (50 $\times$ 4.6 mm), equipment name: Agilent 1200 series system, refractive index detector: Agilent G1362 RID, RI temperature: 35 °C, data processing: Agilent ChemStation S/W, and test method (Mn, Mw and PDI): OECD TG 118.

For example, based on a total weight thereof, the aromatic vinyl compound-vinyl cyanide compound copolymer (shell) may include 55 to 85 % by weight of an aromatic vinyl compound and 15 to 45 % by weight of a vinyl cyanide compound, preferably 60 to 80 % by weight of an aromatic vinyl compound and 20 to 40 % by weight of a vinyl cyanide

# EP 4 700 085 A1

compound, more preferably 65 to 75 % by weight of an aromatic vinyl compound and 25 to 35 % by weight of a vinyl cyanide compound. Within this range, impact resistance and weather resistance may be excellent.

The aromatic vinyl compound-vinyl cyanide compound copolymer (shell) may preferably include an alkyl acrylate. In this case, impact resistance, weather resistance, and processability may be excellent, and the occurrence of whitening during a bending processing may be reduced.

For example, based on a total weight thereof, the aromatic vinyl compound-vinyl cyanide compound copolymer (shell) may include 55 to 85 % by weight of an aromatic vinyl compound, 10 to 35 % by weight of a vinyl cyanide compound, and 1 to 25 % by weight of an alkyl acrylate, preferably 60 to 80 % by weight of an aromatic vinyl compound, 15 to 30 % by weight of a vinyl cyanide compound, and 3 to 20 % by weight of an alkyl acrylate, more preferably 65 to 72 % by weight of an aromatic vinyl compound, 20 to 25 % by weight of a vinyl cyanide compound, and 5 to 15 % by weight of an alkyl acrylate. Within this range, impact resistance and weather resistance may be further improved.

For example, the graft copolymer (A) may be prepared by emulsion polymerization. In this case, gloss and surface hardness may be excellent.

The emulsion polymerization may be performed using an emulsion polymerization method commonly practiced in the technical field to which the present invention pertains without particular limitation. For example, an emulsion graft polymerization method may be used.

For example, the graft copolymer (A) may have a grafting degree of 60 % or more, preferably 60 to 150 %, more preferably 65 to 140 %, still more preferably 65 to 130 %, still more preferably 65 to 100 %, still more preferably 65 to 80 % as calculated by Equation 2 below. Within this range, impact resistance and processability may be excellent, and the occurrence of whitening during a bending processing may be reduced.

Grafting degree (%) = [Weight (g) of grafted monomers/Rubber weight (g)] × 100          [Equation 2]

In Equation 2, the weight (g) of grafted monomers is obtained by subtracting the rubber weight (g) from a weight of insoluble matter (gel) obtained by dissolving a graft copolymer in acetone and performing centrifugation, and the rubber weight (g) is a weight (g) of rubber components theoretically added to graft copolymer powder.

When the weight of the insoluble matter (gel) is measured, 0.5 g of the powdered graft copolymer is added to 50 ml of acetone, followed by stirring at room temperature for 12 hours. Then, centrifugation is performed to separate insoluble matter that is not dissolved in acetone, followed by drying for 12 hours. Then, the weight of the insoluble matter (gel) is measured. The rubber weight (g) is the weight (g) of rubber components theoretically added to 0.5 g of the powdered graft copolymer.

As a specific measurement example, when measuring the weight (g) of insoluble matter (gel), 0.5 g of a powdered graft copolymer is added to 50 ml of acetone, followed by stirring at 210 rpm and room temperature using an orbital shaker (equipment name: Lab companion SKC-6075) for 12 hours. Then, centrifugation is performed at 0 °C and 18,000 rpm for 3 hours using a centrifuge (Supra R30, Hanil Science Co.) to separate insoluble matter that is not dissolved in acetone, followed by drying in a forced convection oven (equipment name: Lab companion OF-12GW) set to 85 °C for 12 hours via forced circulation. Then, the weight of the insoluble matter (gel) is measured.

In the present disclosure, room temperature may be any point within the range of 20 ± 5 °C.

For example, the alkyl acrylate of the present invention may be an alkyl acrylate containing an alkyl group having 1 to 15 carbon atoms. Preferably, the alkyl acrylate may include one or more selected from the group consisting of methyl acrylate, ethyl acrylate, propyl acrylate, butyl acrylate, 2-ethylbutyl acrylate, octyl acrylate, 2-ethylhexyl acrylate, hexyl acrylate, heptyl acrylate, n-pentyl acrylate, and lauryl acrylate, more preferably an alkyl acrylate including an alkyl group having 1 to 4 or 8 carbon atoms, still more preferably butyl acrylate, ethylhexyl acrylate, or a mixture thereof, still more preferably butyl acrylate.

For example, the aromatic vinyl compound of the present invention may include one or more selected from the group consisting of styrene, α-methyl styrene, o-methyl styrene, ρ-methyl styrene, m-methyl styrene, ethyl styrene, isobutyl styrene, t-butyl styrene, o-bromo styrene, ρ-bromo styrene, m-bromo styrene, o-chloro styrene, ρ-chloro styrene, m-chloro styrene, vinyltoluene, vinylxylene, fluorostyrene, and vinylnaphthalene, preferably one or more selected from the group consisting of styrene and α-methyl styrene, more preferably styrene. In this case, due to the appropriate fluidity, processability and mechanical properties such as impact resistance may be excellent.

The vinyl cyanide compound of the present invention may include one or more selected from the group consisting of acrylonitrile, methacrylonitrile, phenylacrylonitrile, and α-chloroacrylonitrile, preferably acrylonitrile.

In the present disclosure, a polymer including a certain compound (monomer) means a polymer prepared by polymerizing the compound (monomer), and a unit in the polymer is derived from the compound.

9

## (B) Aromatic vinyl compound-vinyl cyanide compound copolymer

For example, based on a total weight of the base resin, the copolymer (B) may be included in an amount of 19 to 54 % by weight, preferably 23 to 50 % by weight, more preferably 26 to 43 % by weight, still more preferably 27 to 35 % by weight. Within this range, processability and low-whitening characteristics may be excellent.

For example, the copolymer (B) may be a copolymer including an aromatic vinyl compound and a vinyl cyanide compound. In this case, processability and low-whitening characteristics may be excellent.

For example, based on a total weight thereof, the copolymer (B) may include 10 % by weight or more and less than 26 % by weight, preferably 13 to 23 % by weight or 15 to 25.5 % by weight, more preferably 15 to 25.5 % by weight, still more preferably 17 to 25.5 % by weight, still more preferably 19 to 25.5 % by weight, still more preferably 20 to 25.5 % by weight of a vinyl cyanide compound. Within this range, the occurrence of whitening during a bending processing may be reduced even in a thick sheet, and processability may be excellent.

In the present disclosure, unless otherwise specified, the sheet refers to a sheet, a film, or foil.

For example, the copolymer (B) may have a weight average molecular weight of 65,000 to 110,000 g/mol, preferably 70,000 to 100,000 g/mol, more preferably 70,000 to 90,000 g/mol, still more preferably 75,000 to 85,000 g/mol. Within this range, the occurrence of whitening during a bending processing may be reduced even in a thick sheet, and processability may be excellent.

The types of the aromatic vinyl compound and vinyl cyanide compound constituting the copolymer (B) may be the same as the types of the aromatic vinyl compound and vinyl cyanide compound included in the graft copolymer (A) of the present invention.

The copolymer (B) may be preferably a styrene-acrylonitrile copolymer (SAN resin), an α-methylstyrene-acrylonitrile copolymer (heat-resistant SAN resin), or a mixture thereof, more preferably a styrene-acrylonitrile copolymer (SAN resin). In this case, processability, gloss, and surface hardness may be excellent.

For example, the copolymer (B) may be prepared by suspension polymerization, emulsion polymerization, solution polymerization, or bulk polymerization, preferably bulk polymerization. In this case, mechanical properties may be excellent.

The suspension polymerization, emulsion polymerization, solution polymerization, and bulk polymerization may be performed using suspension polymerization, emulsion polymerization, solution polymerization, and bulk polymerization methods, respectively, commonly practiced in the technical field to which the present invention pertains, without particular limitation.

## (C) Thermoplastic polyester elastomer

For example, based on 100 parts by weight of the base resin, the thermoplastic polyester elastomer (C) may be included in an amount of 3 parts by weight or more, preferably 5 parts by weight or more, more preferably 7 parts by weight or more, still more preferably 9 parts by weight or more, or 35 parts by weight or less, preferably 27 parts by weight or less, still more preferably 9 to 35 parts by weight, still more preferably 9 to 27 parts by weight. Within this range, mechanical properties and processability may be excellent, the occurrence of whitening during a bending processing may be reduced even in a large thickness, and thus an aesthetically pleasing appearance may be realized. In addition, the composition of the present invention may be applicable to an unpainted sheet and an all-in-one product with no joints between a substrate and the product.

For example, the thermoplastic polyester elastomer (C) may be an elastomer including an aromatic dicarboxylic acid or an ester derivative thereof; an aliphatic diol; and a polyalkylene oxide. In this case, flexibility, mechanical strength, and heat resistance may be increased, and the physical balance may be excellent.

For example, a crystalline hard segment may be formed from the aromatic dicarboxylic acid or the ester derivative thereof and an aliphatic diol, and a soft segment may be formed from a polyalkylene oxide, and the crystalline hard segment and the soft segment may be randomly arranged.

For example, the aromatic dicarboxylic acid may include one or more selected from the group consisting of terephthalic acid, isophthalic acid, 2,6-naphthalene dicarboxylic acid, 1,5-naphthalene dicarboxylic acid, and 1,4-cyclohexane dicarboxylic acid, preferably terephthalic acid, isophthalic acid, or a mixture thereof.

For example, the ester derivative of the aromatic dicarboxylic acid may include one or more selected from the group consisting of dimethyl terephthalate, dimethyl isophthalate, 2,6-dimethyl naphthalene dicarboxylate, dimethyl 1,5-naphthalene dicarboxylic acid, and dimethyl 1,4-cyclohexane dicarboxylate, preferably dimethyl terephthalate, dimethyl isophthalate, or a mixture thereof.

Based on a total weight of the thermoplastic polyester elastomer, the aromatic dicarboxylic acid or the ester derivative thereof may be included in an amount of 25 to 70 % by weight, preferably 30 to 65 % by weight, more preferably 35 to 60 % by weight. Within this range, the reaction may be performed easily.

For example, the aliphatic diol may have a number average molecular weight of 300 g/mol or less, preferably 60 to 300 g/mol.

In the present disclosure, unless otherwise defined, number average molecular weight may be measured using gel permeation chromatography (GPC, Waters Breeze). As a specific example, number average molecular weight may be measured using tetrahydrofuran (THF) as an eluate through gel permeation chromatography (GPC, Waters Breeze). In this case, number average molecular weight is obtained as a relative value to a polystyrene (PS) standard sample. As a specific measurement example, number average molecular weight may be measured under conditions of solvent: THF, column temperature: 40 °C, flow rate: 0.3 ml/min, sample concentration: 20 mg/ml, injection amount: 5 $\mu$l, column model: 1$\times$ PLgel 10 $\mu$m MiniMix-B (250 $\times$ 4.6 mm) + 1$\times$ PLgel 10 $\mu$m MiniMix-B (250 $\times$ 4.6 mm) + 1$\times$ PLgel 10 $\mu$m MiniMix-B Guard (50 $\times$ 4.6 mm), equipment name: Agilent 1200 series system, refractive index detector: Agilent G1362 RID, RI temperature: 35 °C, data processing: Agilent ChemStation S/W, and test method (Mn, Mw, and PDI): OECD TG 118.

The aliphatic diol may include preferably one or more selected from the group consisting of ethylene glycol, propylene glycol, 1,2-propanediol, 1,3-propanediol, 1,4-butanediol, 1,5-pentanediol, 1,6-hexanediol, and 1,4-cyclohexanedimethanol, more preferably 1,4-butanediol.

For example, based on a total weight of the thermoplastic polyester elastomer, the aliphatic diol may be included in an amount of 15 to 45 % by weight, preferably 20 to 40 % by weight, more preferably 25 to 40 % by weight. Within this range, the reaction may proceed smoothly, and the physical property balance between flexibility and mechanical strength may be excellent.

For example, the polyalkylene oxide may be an aliphatic polyester, and may include, as a soft segment, one or more selected from the group consisting of polyethylene glycol, polypropylene glycol, polytetramethylene glycol, polyhexamethylene glycol, a copolymer of ethylene oxide and propylene oxide, an ethylene oxide addition polymer of polypropylene glycol, and a copolymer of ethylene oxide and tetrahydrofuran, preferably polytetramethylene glycol.

For example, based on a total weight of the thermoplastic polyester elastomer, the polyalkylene oxide may be included in an amount of 5 to 50 % by weight, preferably 10 to 45 % by weight, more preferably 15 to 40 % by weight. Within this range, flexibility, mechanical strength, heat resistance, and physical property balance may be excellent.

For example, the polyalkylene oxide may have a number average molecular weight of 600 to 3,000 g/mol, preferably 1,000 to 2,000 g/mol. Within this range, polymerization reaction may proceed stably, and a thermoplastic polyester elastomer having excellent physical property balance may be obtained.

The polyalkylene oxide may preferably be polypropylene glycol having terminals capped with ethylene oxide. In this case, polymerization reactivity may be excellent.

The thermoplastic polyester elastomer (C) may preferably include a branching agent. In this case, the melting viscosity and melting strength of the elastomer may be increased.

For example, the branching agent may include one or more selected from the group consisting of glycerol, pentaerythritol, trimellitic anhydride, trimellitic acid, trimethylol propane, and neopentyl glycol, preferably trimellitic anhydride.

For example, based on 100 % by weight in total of the thermoplastic polyester elastomer, the branching agent may be included in an amount of 0.05 to 0.1 % by weight, preferably 0.05 to 0.09 % by weight, more preferably 0.06 to 0.09 % by weight. Within this range, melting strength may be increased.

For example, the thermoplastic polyester elastomer (C) may be prepared by melt polymerization of an aromatic dicarboxylic acid or an ester derivative thereof, an aliphatic diol, and a polyalkylene oxide. In this case, the physical property balance between flexibility, mechanical strength, and heat resistance may be excellent, and formability may be further improved.

The thermoplastic polyester elastomer (C) may preferably be prepared by additional solid-state polymerization of the resin prepared by melt polymerization. In this case, the physical property balance between flexibility, mechanical strength, and heat resistance may be excellent, and formability may be further improved.

Preferably, when the thermoplastic polyester elastomer is prepared, the aromatic dicarboxylic acid, the aliphatic diol, and the polyalkylene oxide are subjected to transesterification at 140 to 215 °C for 110 to 130 minutes under a titanium butoxide (TBT) catalyst to obtain a bis(4-hydroxy) butyl terephthalate (BHBT) oligomer, the TBT catalyst is added again, and then melt polymerization is performed at 215 to 245 °C for 110 to 130 minutes with stepwise pressure reduction from 760 torr to 0.3 torr.

The melt polymerization reaction may be performed until a melt flow rate, measured at 230 °C under a load of 2.16 kg according to ASTM D1238, reaches 20 g/10 min. After completion of the reaction, the product may be discharged from a reactor by nitrogen pressure, and may be obtained in the form of pellets through pelletizing strands.

Then, the pellets may be subjected to solid-state polymerization under an inert atmosphere, such as nitrogen atmosphere, in a solid-state polymerization reactor or a rotatable vacuum dryer at 140 to 200 °C for 10 to 24 hours.

Until a melt flow rate measured at 230 °C under a load of 2.16 kg according to ASTM D1238 is 10 g/10 min or less, preferably 0.5 to 10 g/10 min, more preferably 1 to 10 g/10 min, still more preferably 3 to 8 g/10 min, high viscosity may be achieved by the solid-state polymerization.

The degree of vacuum applied during the solid-state polymerization may be selected within the degree of vacuum commonly used in the art to which the present invention pertains, without particular limitation.

The solid-state polymerization reactor may be a vessel vacuum dryer connected to a rotatable high vacuum pump, and the inert atmosphere may be nitrogen atmosphere.

In the present disclosure, the content of a monomer in a polymer may mean the weight (wt%) of the monomer added during preparation of the polymer or the weight (wt%) (based on the monomer) of a unit derived from the monomer.

The thermoplastic polyester elastomer (C) may have a melt flow rate of 0.5 to 10 g/10 min, preferably 1 to 10 g/10 min, more preferably 3 to 8 g/10 min as measured at 230 °C under a load of 2.16 kg according to ASTM D1238. Within this range, formability may be excellent.

For example, the thermoplastic polyester elastomer (C) may have a Shore hardness of 30 D to 50 D, preferably 35 D to 47 D, more preferably 35 D to 40 D. Within this range, the flexibility and mechanical strength of a composition may be excellent.

In the present disclosure, unless otherwise stated, Shore hardness may be measured according to the method specified in ISO 868 (Type D).

In the present disclosure, the elastomer may also be referred to as an elastic polymer or elastic rubber, as in the technical field to which the present invention belongs, and a commercially available product may be used as long as the product follows the definition of the present invention.

**Thermoplastic resin composition**

The thermoplastic resin composition may have an alkyl acrylate coverage (X) value of 65 % by weight or more, more preferably 70 % by weight or more, still more preferably 70 to 150 % by weight, still more preferably 70 to 140 % by weight, still more preferably 75 to 140 % by weight, still more preferably 80 to 130 % by weight as calculated by Equation 1 below. Within this range, mechanical properties, weather resistance, and processability may be excellent, low-whitening characteristics may be excellent even at a large thickness, and the composition may be applied to an unpainted molded article.

$$[\text{Equation 1}]$$

$$X = \{(G-Y)/Y\} \times 100$$

In Equation 1, G represents a gel content (wt%) based on a total weight of the thermoplastic resin composition, and Y represents an alkyl acrylate content (wt%) in gel based on a total weight of the thermoplastic resin composition.

In Equation 1, the content of alkyl acrylate in the gel of the thermoplastic resin composition represents the content of alkyl acrylate in the insoluble matter collected in the process of obtaining a gel content described above (based on 100% by weight of the total thermoplastic resin composition introduced). Here, the gel content represents the content of insoluble matter based on 100% by weight of the total thermoplastic resin composition. The insoluble matter is derived from a polymer or copolymer combined with rubber. In the present invention, the polymer or copolymer combined with rubber may be the alkyl acrylate-aromatic vinyl compound-vinyl cyanide compound graft copolymer (A).

The content of the alkyl acrylate is quantitatively measured by nuclear magnetic resonance (NMR) analysis or Fourier transform infrared spectroscopy (FT-IR) analysis.

In the present disclosure, NMR analysis means analysis by $^1$H NMR unless otherwise specified.

In the present disclosure, NMR analysis may be performed using methods commonly practiced in the art, and specific measurement examples are as follows.

-    Equipment name: Bruker 600MHz NMR(AVANCE III HD) CPP BB(1H 19F tunable and broadband, with z-gradient) Prodigy Probe
-    Measurement conditions: 1H NMR(zg30): ns=32, d1=5s, TCE-d2, at room temp.

In the present disclosure, FT-IR analysis may be performed using methods commonly practiced in the art, and specific measurement examples are as follows.

-    Equipment name: Agilent Cary 660
-    Measurement conditions: ATR mode

When measuring the gel content, 1 g of a thermoplastic resin composition is added to 30 ml of acetone, followed by stirring at room temperature for 12 hours. Then, centrifugation is performed to separate insoluble matter that is not dissolved in acetone, followed by drying for 12 hours. Then, the weight of the insoluble matter is measured, and the gel content is calculated by Equation 4 below. As a specific measurement example, when measuring the gel content, 1 g of a thermoplastic resin composition is added to 30 ml of acetone, followed by stirring at 210 rpm and room temperature using an orbital shaker (equipment name: Lab companion SKC-6075) for 12 hours. Then, centrifugation is performed at 0 °C and 18,000 rpm for 3 hours using a centrifuge (Supra R30, Hanil Science Co.) to separate insoluble matter that is not dissolved in acetone, followed by drying in a forced convection oven (equipment name: Lab companion OF-12GW) set to 85 °C for 12 hours via forced circulation. Then, the weight of the insoluble matter is measured, and the gel content is calculated by Equation 4 below.

Gel content (wt%) = [Weight (g) of insoluble matter (gel)/Weight (g) of sample] $\times$ 100          [Equation 4]

In the present disclosure, the alkyl acrylate coverage value is a parameter for measuring the degree of dispersion of an aromatic vinyl compound-vinyl cyanide compound polymer grafted onto alkyl acrylate rubber in the thermoplastic resin composition. When the alkyl acrylate coverage value is high, the aromatic vinyl compound-vinyl cyanide compound polymer is evenly grafted onto the alkyl acrylate rubber to cover the alkyl acrylate rubber uniformly, thereby increasing gloss and achieving excellent tensile strength, colorability and non-whitening properties. In addition, as the alkyl acrylate coverage value increases, the distance between rubber particles is decreased, thereby reducing voids due to cracks occurring inside the thermoplastic resin composition and suppressing whitening during bending.

Here, the alkyl acrylate coverage value indicates the degree of dispersion of the aromatic vinyl compound-vinyl cyanide compound polymer grafted onto the alkyl acrylate in the thermoplastic resin composition, and the grafting degree indicates a degree to which the aromatic vinyl compound-vinyl cyanide compound polymer is grafted onto the alkyl acrylate in an alkyl acrylate-aromatic vinyl compound-vinyl cyanide compound graft copolymer.

In addition, the alkyl acrylate coverage value is obtained by quantitatively calculating the content of the alkyl acrylate present in the thermoplastic resin composition through nuclear magnetic resonance (NMR) analysis or Fourier transform infrared spectroscopy (FT-IR) analysis, and the grafting degree is obtained based on the content of rubber components added during polymerization.

After cupping a central portion of a sheet having a thickness of 0.3 mm at a speed of 10 mm/min to a depth of 8 mm using a 20 mm diameter ball and an electric Erichsen cupping tester, when values before and after cupping are measured using a color difference meter, and a color difference ($\triangle$E) is calculated by Equation 3 below, the thermoplastic resin composition may have a color difference ($\triangle$E) of preferably 2.0 or less, more preferably 1.6 or less, still more preferably 1.3 or less, still more preferably 1.0 or less, still more preferably 0.8 or less, still more preferably 0.6 or less. Within this range, the whitening phenomenon that occurs during bending or folding processing may be reduced, and thus the low-whitening characteristics may be excellent. Accordingly, appearance quality and emotional quality may be improved, and the composition may be applied to an unpainted molded article.

$$[\text{Equation 3}]$$

$$\Delta E = \sqrt{(L' - L_0)^2 + (a' - a_0)^2 + (b' - b_0)^2}$$

In Equation 3, L', a', and b' represent L, a, and b values measured using a CIE LAB color coordinate system after cupping, respectively, and $L_0$, $a_0$, and $b_0$ represent L, a, and b values measured using the CIE LAB color coordinate system before cupping.

The thermoplastic resin composition may have an Rockwell hardness of preferably 44 or more, more preferably 49 or more, still more preferably 54 or more, still more preferably 59 or more, still more preferably 64 or more as measured in an R-scale according to ASTM D785. Within this range, due to excellent surface hardness, appearance quality and emotional quality may be improved.

The thermoplastic resin composition may have a tensile strength of preferably 180 kgf/cm$^2$ or more, preferably 200 kgf/cm$^2$ or more, more preferably 220 kgf/cm$^2$ or more, still more preferably 220 to 420 kgf/cm$^2$ as measured at a cross-head speed of 50 mm/min using an injection specimen having a thickness of 3 mm according to ASTM D638. Within this range, physical property balance and processability may be excellent.

The thermoplastic resin composition may have an elongation of preferably 55 % or more, more preferably 70 % or more, still more preferably 90 % or more, still more preferably 110 % or more, still more preferably 110 to 200 % as measured at a cross-head speed of 50 mm/min using an injection specimen having a thickness of 3 mm according to ASTM D638. Within this range, physical property balance and processability may be excellent.

The thermoplastic resin composition may have a flexural strength of 270 kgf/cm$^2$ or more, more preferably 300 kgf/cm$^2$ or more, still more preferably 350 kgf/cm$^2$ or more, still more preferably 400 kgf/cm$^2$ or more, still more preferably 400 to 600 kgf/cm$^2$ as measured at a span of 50 mm and a test speed of 10 mm/min using an injection specimen having a thickness of 3 mm according to ASTM D790. Within this range, physical property balance and processability may be excellent.

When a sheet made of the thermoplastic resin composition having a thickness of 0.3 mm is extruded to a length of 1 m or more at a molding temperature of 220 °C, a screw rotation rate of 100 rpm, a roll temperature of 85 °C, and a roll rotation rate of 1.5 m/min using a T-die extruder, no burst occurs. In this case, physical property balance and processability may be excellent, and appearance quality and emotional quality may be improved.

When a sheet made of the thermoplastic resin composition having a thickness of 0.3 mm is extruded to a length of 1 m or more at a molding temperature of 220 °C, a screw rotation rate of 100 rpm, a roll temperature of 85 °C, and a roll rotation rate of 1.5 m/min using a T-die extruder, and the width and thickness of the sheet are measured at more than 10 locations, the sheet has a deviation of ± 10 % or less. Within this range, physical property balance and processability may be excellent, and appearance quality and emotional quality may be improved.

In the present invention, Techline 20T (screw diameter: 20 mm, L/D = 25, Collins Co.) may be used as the T-die extruder.

Based on 100 parts by weight of the base resin, the thermoplastic resin composition may further include 0.01 to 5 parts by weight, 0.05 to 3 parts by weight, 0.1 to 2 parts by weight, or 0.5 to 1 part by weight of each of one or more selected from the group consisting of a heat stabilizer, a light stabilizer, a dye, a pigment, a colorant, a lubricant, a release agent, an antistatic agent, an antibacterial agent, a processing aid, a metal deactivator, a flame retardant, a smoke suppressant, an anti-drip agent, an antifriction agent, and an anti-wear agent. Within this range, the required properties may be effectively implemented without deteriorating the inherent properties of the thermoplastic resin composition of the present invention.

The heat stabilizer may preferably include a primary heat stabilizer and a secondary heat stabilizer.

For example, the primary heat stabilizer may be a phenol-based heat stabilizer. Preferably, the primary heat stabilizer may include one or more selected from the group consisting of 2-t-butyl-6-(3-t-butyl-2-hydroxy-5-methylbenzyl)-4-methylphenyl acrylate, 2-[1-(2-hydroxy-3,5-di-t-pentylphenyl)ethyl]-4,6-di-t-pentylphenyl acrylate, 1,6-hexanediolbis-[3-(3,5-di-t-butyl-4-hydroxyphenyl)propionate], 2,2-thiodiethylenebis-[3-(3,5-di-t-butyl-4-hydroxyphenyl)propionate], 3,5-di-t-butyl-4-hydroxybenzylphosphonatediethyl ester, tris(2,6-dimethyl-3-hydroxy-4-t-butylbenzyl)isocyanurate, tris(3,5-di-t-butyl-4-hydroxybenzyl)isocyanurate, tris[(3,5-di-t-butyl-4-hydroxyphenyl)propionyloxyethyl]isocyanurate, tris(4-t-butyl-2,6-dimethyl-3-hydroxybenzyl)isocyanurate, 2,2'-methylenebis(4-methyl-6-t-butylphenol)terephthalate, 1,3,5-trimethyl-2,4,6-tris(3,5-di-t-butyl-4-hydroxybenzyl)benzene, 3,9-bis[1,1-dimethyl-2-{β-(3-t-butyl-4-hydroxy-5-methylphenyl)propionyl oxy}ethyl]-2,4,8,10-tetraoxaspiro[5,5]undecane, 2,2-bis[4-(2-3,5-di-t-butyl-4-hydroxyhydrocinnamoyloxy)ethoxyphenyl]propane, and β-(3,5-dit-butyl-4-hydroxyphenyl)propionic acid stearyl ester, more preferably octadecyl 3-(3,5-ditertiary-butyl-4-hydroxyphenyl)propanoate (IR1076).

For example, the secondary heat stabilizer may be a phosphorus heat stabilizer. Preferably, the secondary heat stabilizer may include one or more selected from the group consisting of bis(dialkylphenyl)pentaerythritol diphosphite ester, phosphite ester, trioctyl phosphite, trilauryl phosphite, tridecyl phosphite, (octyl)diphenyl phosphite, tris(2,4-di-t-butylphenyl) phosphite, triphenyl phosphite, tris(butoxyethyl) phosphite, tris(nonylphenyl) phosphite, distearylpentaerythritol diphosphite, tetra(tridecyl)-1,1,3-tris(2-methyl-5-t-butyl-4-hydroxy-phenyl)butane diphosphite, tetra(C12-C15 mixed alkyl)-4,4'-isopropylidenediphenyl diphosphite, tetra(tridecyl)-4,4'-butylidenebis(3-methyl-6-t-butylphenol)diphosphite, tris(mono- and di-mixed nonylphenyl) phosphite, hydrogenated-4,4'-isopropylidenediphenol polyphosphite, phenyl(4,4'-isopropylidenediphenol)pentaerythritol diphosphite, distearylpentaerythritol diphosphite, tris[4,4'-isopropylidenebis(2-t-butylphenol)] phosphite, di(isodecyl)phenyl phosphite, 4,4'-isopropylidenebis(2-t-butylphenol)bis(nonylphenyl) phosphite, bis(2,4-di-t-butyl-6-methylphenyl)ethyl phosphite, 2-[{2,4,8,10-tetra-t-butyldibenz[d,f][1.3.2]-dioxa-phosphepine-6-yl}oxy]-N,N-bis[2-[{2,4,8,10-tetra-t-butyl-dibenz[d,f][1.3.2]-dioxaphosphepine-6-yl}oxy]ethyl]-ethaneamine, and 6-[3-(3-t-butyl-4-hydroxy-5-methylphenyl)propoxy]-2,4,8,10-tetra-t-butyldibenz[d,f][1.3.2]-dioxaphosphepine, more preferably tris(2,4-di-tert-butylphenyl) phosphite (IF168).

The lubricant may preferably include one or more selected from the group consisting of aliphatic amide-based lubricants, fatty acid ester-based lubricants, and olefin-based wax.

The aliphatic amide-based lubricants may preferably include one or more selected from the group consisting of stearamide, oleamide, erucamide, ethylene bis stearamide, and ethylene bis oleamide.

The fatty acid ester-based lubricants may preferably include one or more selected from the group consisting of fatty acid ester of alcohol or polyhydric alcohol, hydrogenated oil, butyl stearate, stearic acid monoglyceride, pentaerythritol tetrastearate, stearylstearate, ester wax and alkyl phosphate ester.

The olefin-based wax may be preferably polyethylene wax.

## Method of preparing thermoplastic resin composition

A method of preparing the thermoplastic resin composition of the present invention includes a step of kneading and extruding, at 200 to 300 °C and 100 to 500 rpm, 100 parts by weight of a base resin including 46 to 81 % by weight of an alkyl acrylate-aromatic vinyl compound-vinyl cyanide compound graft copolymer (A) containing an alkyl acrylate rubber having an average particle diameter of 50 to 150 nm, and 19 to 54 % by weight of an aromatic vinyl compound-vinyl cyanide compound copolymer (B) including 10 % by weight or more and less than 26 % by weight of a vinyl cyanide compound and having a weight average molecular weight of 65,000 to 110,000 g/mol; and 3 parts by weight or more of a thermoplastic polyester elastomer (C). The thermoplastic resin composition has an alkyl acrylate coverage value (X) of 65 % by weight or more as calculated by Equation 1 below. In this case, mechanical properties, weather resistance, and processability may be excellent. In addition, due to excellent low-whitening characteristics even at a large thickness, an aesthetically pleasing appearance may be realized. In addition, the composition of the present invention may be applied to an unpainted sheet, and economics and eco-friendliness may be excellent.

$$[\text{Equation 1}]$$

$$X = \{(G-Y)/Y\} \times 100$$

In Equation 1, G represents a gel content (wt%) based on a total weight of the thermoplastic resin composition, and Y represents an alkyl acrylate content (wt%) in gel based on a total weight of the thermoplastic resin composition.

The method of preparing the thermoplastic resin composition shares all the technical features of the thermoplastic resin composition described above. Therefore, the description of the overlapping parts will be omitted.

The kneading and extruding may be preferably performed using an extruder at 200 to 300 °C, more preferably 210 to 260 °C, still more preferably 220 to 260 °C. Within this range, stable extrusion is possible and the mixing effect is excellent. At this time, the temperature is the temperature set in the cylinder.

For example, the kneading and extruding may be performed at a screw rotation speed of 100 to 500 rpm, preferably 150 to 450 rpm, more preferably 200 to 400 rpm. In this case, due to the appropriate throughput per unit time, the process efficiency may be excellent.

For example, the thermoplastic resin composition obtained through extrusion may be manufactured into pellets using a pelletizer.

Any extruder commonly used in the technical field to which the present invention belongs may be used in the present invention without any particular limitation. Preferably, a twin-screw extruder may be used.

### Molded article

A molded article of the present invention includes the thermoplastic resin composition. In this case, mechanical properties, processability, and weather resistance may be excellent. In addition, due to excellent low-whitening characteristics even at a large thickness, an aesthetically pleasing appearance may be realized. In addition, the molded article of the present invention may be applied to an unpainted molded article, as a specific example, an unpainted sheet. In addition, economics and eco-friendliness may be excellent.

For example, the molded article may be an injection molded article, an extrusion molded article, or a calender molded article.

The injection molded article may preferably be an interior or exterior part of automobiles and a part for electrical or electronic products.

The extrusion molded article may preferably be a film, a sheet, or a foil, and specifically may be a decorative sheet, an outdoor construction material finishing material, a roofing finishing material, an interior film, a wallpaper, an edge band, a vinyl-coated metal (VCM), a flooring material, a PSP (plastic-steel-plastic) for molding, or a film for wrapping.

The calender molded article may preferably be a film, a sheet, or a foil, and specifically may be a decorative sheet, an outdoor construction material finishing material, a roofing finishing material, an interior film, a wallpaper, an edge band, a vinyl-coated metal (VCM), a flooring material, a PSP (plastic-steel-plastic) for molding or a film for wrapping.

The molded article may preferably be an unpainted sheet. In this case, a final product may be manufactured without the conventional painting process, resulting in cost savings and eco-friendliness.

A method of manufacturing the molded article may preferably include a step of obtaining an extrudate by kneading and extruding, at 200 to 300 °C and 100 to 500 rpm, 100 parts by weight of a base resin including 46 to 81 % by weight of an alkyl acrylate-aromatic vinyl compound-vinyl cyanide compound graft copolymer (A) containing an alkyl acrylate rubber having an average particle diameter of 50 to 150 nm, and 19 to 54 % by weight of an aromatic vinyl compound-vinyl cyanide compound copolymer (B) including 10 % by weight or more and less than 26 % by weight of a vinyl cyanide compound and having a weight average molecular weight of 65,000 to 110,000 g/mol; and 3 parts by weight or more of a thermoplastic polyester elastomer (C); and a step of manufacturing a molded article by molding the extrudate. The extrudate may have an alkyl acrylate coverage value (X) of 65 % by weight or more as calculated by Equation 1 below. In this case, mechanical properties, processability, and weather resistance may be excellent. In addition, due to excellent low-whitening characteristics even at a large thickness, an aesthetically pleasing appearance may be realized. In addition, the composition of the present invention may be applied to an unpainted sheet, and economics and eco-friendliness may be excellent.

[Equation 1]

$$X = \{(G-Y)/Y\} \times 100$$

In Equation 1, G represents a gel content (wt%) based on a total weight of the thermoplastic resin composition, and Y represents an alkyl acrylate content (wt%) in gel based on a total weight of the thermoplastic resin composition.

For example, the extrudate may have a pellet or plate shape.

In the present disclosure, the plate shape is not particularly limited as long as it is defined as a plate shape in the technical field to which the present invention belongs, and may include, for example, a flat shape, a sheet shape, a film shape, etc.

In describing the thermoplastic resin composition of the present invention, the method of preparing the same, and the molded article including the same, it should be noted that other conditions or equipment not explicitly described herein may be appropriately selected within the range commonly practiced in the art without particular limitation.

Hereinafter, the present invention will be described in more detail with reference to the following preferred examples. However, these examples are provided for illustrative purposes only and should not be construed as limiting the scope and spirit of the present invention. In addition, it will be apparent to those skilled in the art that various changes and modifications may be made without departing from the spirit and scope of the present invention, and such changes and modifications are also within the scope of the appended claims.

[Examples]

Materials used in examples and comparative examples are as follows.

* ASA graft copolymer (A-1): An ASA graft copolymer (core: 38 % by weight of butyl acrylate and 7 % by weight of styrene, shell: 4 % by weight of butyl acrylate, 40 % by weight of styrene, and 11 % by weight of acrylonitrile, grafting degree: 70 %) containing an alkyl acrylate rubber having an average particle diameter of 100 nm prepared by emulsion polymerization

* ASA graft copolymer (A-2): An ASA graft copolymer (core: 45 % by weight of butyl acrylate, shell: 44 % by weight of styrene and 11 % by weight of acrylonitrile, grafting degree: 50 %) containing an alkyl acrylate rubber having an average particle diameter of 100 nm prepared by emulsion polymerization

* ASA graft copolymer (A-3): An ASA graft copolymer (core: 38 % by weight of butyl acrylate and 7 % by weight of styrene, shell: 4 % by weight of butyl acrylate, 40 % by weight of styrene, and 11 % by weight of acrylonitrile, grafting degree: 70 %) containing an alkyl acrylate rubber having an average particle diameter of 120 nm prepared by emulsion polymerization

* SAN copolymer (B-1): A styrene-acrylonitrile copolymer including 20 % by weight of acrylonitrile and having a weight average molecular weight of 80,000 g/mol

* SAN copolymer (B-2): A styrene-acrylonitrile copolymer including 20 % by weight of acrylonitrile and having a weight average molecular weight of 40,000 g/mol

* SAN copolymer (B-3): A styrene-acrylonitrile copolymer including 20 % by weight of acrylonitrile and having a weight average molecular weight of 180,000 g/mol

* SAN copolymer (B-4): A styrene-acrylonitrile copolymer including 20 % by weight of acrylonitrile and having a weight average molecular weight of 150,000 g/mol

* SAN copolymer (B-5): A styrene-acrylonitrile copolymer including 27 % by weight of acrylonitrile and having a weight average molecular weight of 150,000 g/mol

* SAN copolymer (B-6): A styrene-acrylonitrile copolymer including 5 % by weight of acrylonitrile and having a weight average molecular weight of 110,000 g/mol

* TPEE (C): A thermoplastic polyester elastomer (product name: KEYFLEX BT2140D, manufacturer: LG Chemical Co.) having a melt flow rate (230 °C, 2.16 kg) of 5 g/10 min and a Shore D hardness of 40 D

Examples 1 to 9 and Comparative Examples 1 to 9

According to the contents shown in Tables 1 and 2 below, the components shown in Tables 1 and 2 were introduced into a twin-screw extruder, and melt-kneading and extrusion were performed at 230 °C and 150 rpm to obtain pellets. The obtained pellets were injection-molded at 220 °C to produce specimens.

In addition, the obtained pellets were extruded at an extrusion screw speed of 100 rpm, an extrusion temperature of 220 °C, a 3-axis roll temperature of 85 °C, and a roll rotation speed of 1.5 m/min using a T-die extruder (single screw, 20 T, L/D=25, Collins Co.) to obtain a sheet having a thickness of 0.3 mm, and the physical properties thereof were measured.

[Test Examples]

The properties of the pellets or specimens obtained from Examples 1 to 9 and Comparative Examples 1 to 9 were measured by the following methods, and the results are presented in Tables 1 and 2 below.

**Measurement methods**

* Alkyl acrylate coverage value (X value, wt%) of thermoplastic resin composition: The alkyl acrylate coverage value was calculated by Equation 1 below.

$$[\text{Equation 1}]$$

$$X = \{(G-Y)/Y\} \times 100$$

In Equation 1, G represents a gel content (wt%) based on a total weight of the thermoplastic resin composition, and Y represents an alkyl acrylate content (wt%) in gel based on a total weight of the thermoplastic resin composition.
Here, the content of alkyl acrylate in the gel was quantitatively measured using an [1]NMR analyzer or FT-IR. The specific measurement conditions are as follows.

$^1$H NMR

- Equipment name: Bruker 600MHz NMR(AVANCE III HD) CPP BB(1H 19F tunable and broadband, with z-gradient) Prodigy Probe
- Measurement conditions: 1H NMR(zg30): ns=32, d1=5s, TCE-d2, at room temp.

FT-IR

- Equipment name: Agilent Cary 66
- Measurement conditions: ATR mode

* Gel content (%): When measuring the gel content, 1 g of the pellets obtained by extruding the thermoplastic resin composition was added to 30 ml of acetone, followed by stirring at 210 rpm and room temperature using an orbital shaker (equipment name: Lab companion SKC-6075) for 12 hours. Then, centrifugation was performed at 0 °C and 18,000 rpm for 3 hours using a centrifuge (Supra R30, Hanil Science Co.) to separate insoluble matter that was not dissolved in acetone, followed by drying in a forced convection oven (equipment name: Lab companion OF-12GW) set to 85 °C for 12 hours via forced circulation. Then, the weight of the insoluble matter was measured, and the gel content was calculated by Equation 4 below.

Gel content (wt%) = [Weight (g) of insoluble matter (gel)/Weight (g) of sample] × 100          [Equation 4]

Grafting degree (%):0.5 g of the powdered graft polymer was added to 50 ml of acetone, agitation was performed at room temperature for 12 hours, centrifugation was performed to separate only insoluble matter that was not dissolved in acetone, and the separated insoluble matter was dried for 12. Then, the weight of the dried insoluble matter was measured, and the grafting degree was calculated by Equation 2 below.

Grafting degree (%) = [Weight (g) of grafted monomers/Rubber weight (g)] × 100          [Equation 2]

In Equation 2, the weight (g) of grafted monomers is obtained by subtracting the rubber weight (g) from a weight of insoluble matter (gel) obtained by dissolving a graft copolymer in acetone and performing centrifugation, and the rubber weight (g) is a weight (g) of rubber components theoretically added to graft copolymer powder.

As a specific measurement example, when measuring the weight (g) of insoluble matter (gel), 0.5 g of a powdered graft copolymer was added to 50 ml of acetone, followed by stirring at 210 rpm and room temperature using an orbital shaker (equipment name: Lab companion SKC-6075) for 12 hours. Then, centrifugation was performed at 0 °C and 18,000 rpm for 3 hours using a centrifuge (Supra R30, Hanil Science Co.) to separate insoluble matter that was not dissolved in acetone, followed by drying in a forced convection oven (equipment name: Lab companion OF-12GW) set to 85 °C for 12 hours via forced circulation. Then, the weight of the insoluble matter (gel) was measured.

* Color difference (△E): After cupping a central portion of a sheet having a thickness of 0.3 mm at a speed of 10 mm/min to a depth of 8 mm using a 20 mm diameter ball and an electric Erichsen cupping tester, values before and after cupping were measured using a color difference meter, and a color difference (△E) was calculated by Equation 3 below. As △E decreases, low whitening characteristics are improved.

[Equation 3]

$$\Delta E=\sqrt{(L'-L_0)^2+(a'-a_0)^2+(b'-b_0)^2}$$

In Equation 3, L', a', and b' represent L, a, and b values measured using a CIE LAB color coordinate system after cupping, respectively, and $L_0$, $a_0$, and $b_0$ represent L, a, and b values measured using the CIE LAB color coordinate system before cupping.

* Tensile strength (kgf/cm$^2$) and elongation (%): Tensile strength and elongation were measured at a cross-head speed of 50 mm/min using an injection specimen having a thickness of 3 mm according to ASTM D638.
* Flexural strength (kgf/cm$^2$): Flexural strength was measured at a span of 50 mm and a test speed of 10 mm/min using an injection specimen having a thickness of 3 mm according to ASTM D790.
* Hardness: Rockwell hardness was measured in an R-scale according to ASTM D785.
* Processability: Burst characteristics and dimensional stability were measured and evaluated according to the following criteria.
○: Both burst characteristics and dimensional stability are excellent.
X: Burst characteristics, dimensional stability, or both are poor.

- Burst characteristics: When there is no burst while extruding a sheet with a thickness of 0.3 mm to a length of 1 m or longer using a T-die extruder, it is evaluated as excellent.

- Dimensional stability: After extruding a sheet with a thickness of 0.3 mm to a length of 1 m or longer using a T-die extruder, the width and thickness of the sheet are measured at more than 10 locations, and when the deviation is ±10 % or less, it is evaluated as excellent.

[Table 1]

| Classification (wt%) | Examples | | | | | | | | |
|---|---|---|---|---|---|---|---|---|---|
| | 1 | 2 | 3 | 4 | 5 | 6 | 7 | 8 | 9 |
| ASA (A-1) | 66.7 | 72.2 | 77.8 | 57.9 | 63.2 | 68.4 | 73.7 | 68.8 | |
| ASA (A-2) | | | | | | | | | |
| ASA (A-3) | | | | | | | | | 66.7 |
| SAN (B-1) | 33.3 | 27.8 | 22.2 | 42.1 | 36.8 | 31.6 | 26.3 | 31.3 | 33.3 |
| SAN (B-2) | | | | | | | | | |
| SAN (B-3) | | | | | | | | | |
| SAN (B-4) | | | | | | | | | |

(continued)

| Classification (wt%) | Examples | | | | | | | | |
|---|---|---|---|---|---|---|---|---|---|
| | 1 | 2 | 3 | 4 | 5 | 6 | 7 | 8 | 9 |
| SAN (B-5) | | | | | | | | | |
| TPEE (C) | 11.1 | 11.1 | 11.1 | 5.3 | 5.3 | 5.3 | 5.3 | 25.0 | 11.1 |
| Physical properties | | | | | | | | | |
| Grafting degree (%) of ASA (A) | 70 | 70 | 70 | 70 | 70 | 70 | 70 | 70 | 70 |
| X value (wt%) | 90 | 90 | 90 | 90 | 90 | 90 | 90 | 90 | 90 |
| Tensile strength (kgf/cm$^2$) | 300 | 250 | 200 | 380 | 330 | 280 | 230 | 260 | 300 |
| Elongation (%) | 180 | 180 | 160 | 60 | 110 | 150 | 160 | 180 | 180 |
| Flexural Strength (kgf/cm$^2$) | 450 | 400 | 300 | 550 | 500 | 450 | 300 | 400 | 450 |
| Hardness (R-scale) | 60 | 50 | 45 | 95 | 75 | 70 | 45 | 50 | 60 |
| Color difference (ΔE) | 0.4 | 0.5 | 0.4 | 1.5 | 1.1 | 0.4 | 0.4 | 0.4 | 0.4 |
| Processability | ○ | ○ | ○ | ○ | ○ | ○ | ○ | ○ | ○ |

[Table 2]

| Classification (wt%) | Comparative Examples | | | | | | | | |
|---|---|---|---|---|---|---|---|---|---|
| | 1 | 2 | 3 | 4 | 5 | 6 | 7 | 8 | 9 |
| ASA (A-1) | 88.9 | 33.3 | | 66.7 | 66.7 | 66.7 | 66.7 | 60 | 66.7 |
| ASA (A-2) | | | 66.7 | | | | | | |
| ASA (A-3) | | | | | | | | | |
| SAN (B-1) | 11.1 | 66.7 | 33.3 | | | | | 40 | |
| SAN (B-2) | | | | 33.3 | | | | | |
| SAN (B-3) | | | | | 33.3 | | | | |
| SAN (B-4) | | | | | | 33.3 | | | |
| SAN (B-5) | | | | | | | 33.3 | | |
| SAN (B-6) | | | | | | | | | 33.3 |
| TPEE (C) | 11.1 | 11.1 | 11.1 | 11.1 | 11.1 | 11.1 | 11.1 | 0 | 11.1 |
| Physical properties | | | | | | | | | |
| Grafting degree (%) of ASA (A) | 70 | 70 | 50 | 70 | 70 | 70 | 70 | 70 | 70 |
| X value (wt%) | 90 | 90 | 50 | 90 | 90 | 90 | 90 | 90 | 90 |
| Tensile strength (kgf/cm$^2$) | 200 | 520 | 220 | 300 | 300 | 300 | 280 | 350 | 170 |
| Elongation (%) | 250 | 50 | 160 | 180 | 180 | 180 | 180 | 120 | 200 |
| Flexural strength (kgf/cm$^2$) | 200 | 750 | 380 | 450 | 450 | 450 | 430 | 600 | 200 |
| Hardness (R-scale) | - | 100 | 42 | 60 | 60 | 60 | 60 | 90 | 42 |
| Color difference (ΔE) | 0.5 | 40 | 8.1 | 0.4 | 7.7 | 6.9 | 4.8 | 10.1 | 1.5 |
| Processability | ○ | ○ | ○ | X | ○ | ○ | ○ | ○ | ○ |
| -: Not measurable | | | | | | | | | |

As shown in Tables 1 and 2, in the case of the thermoplastic resin compositions of Examples 1 to 9 according to the present invention, compared to Comparative Examples 1 to 9, the color difference was greatly reduced in a thick sheet, indicating that low-whitening characteristics were excellent. In addition, tensile strength, elongation, flexural strength, hardness, and processability were excellent.

On the other hand, in the case of Comparative Example 1 including an excess of the ASA graft copolymer (A-1) and a small amount of the SAN copolymer (B-1), flexural strength was low, and hardness could not be measured. In the case of Comparative Example 2 including a small amount of the ASA graft copolymer (A-1) and an excess of the SAN copolymer (B-1), the color difference was significantly increased, and thus low-whitening characteristics were poor. In addition, elongation was very low.

In addition, in the case of Comparative Example 3 including the ASA graft copolymer (A-2), the color difference was greatly increased, indicating that low-whitening characteristics were poor.

In addition, in the case of Comparative Examples 4 to 7 including the SAN copolymer (B-2), the SAN copolymer (B-3), the SAN copolymer (B-4), and the SAN copolymer (B-5), respectively, that do not satisfy the acrylonitrile content and/or weight average molecular weight range of the SAN copolymer (B), the processability was reduced, or the color difference was increased, resulting in poor low-whitening characteristics.

In addition, in the case of Comparative Example 8 without including the TPEE (C), the color difference was greatly increased, indicating that low-whitening characteristics were very poor.

In addition, in the case of Comparative Example 9 including the SAN copolymer (B-6) that does not satisfy the acrylonitrile content of the SAN copolymer (B), tensile strength and flexural strength were significantly reduced, and hardness was also reduced.

In addition, FIG. 1 below shows images taken after cupping, using an electric Erichsen cupping tester, the sheet manufactured using the thermoplastic resin composition of Example 1 according to the present invention and the sheet manufactured using the thermoplastic resin composition of Comparative Example 1. Example 1 was confirmed to have excellent low-whitening characteristics as no whitening occurred compared to Comparative Example 1.

In conclusion, when a thermoplastic resin composition was prepared by including a base resin including an alkyl acrylate-aromatic vinyl compound-vinyl cyanide compound graft copolymer containing a rubber having a predetermined average particle diameter according to the present invention and an aromatic vinyl compound-vinyl cyanide compound copolymer including a vinyl cyanide compound in a predetermined content and having a predetermined weight average molecular weight, and a thermoplastic polyester elastomer in a predetermined content ratio, and the alkyl acrylate coverage value of the thermoplastic resin composition was adjusted in a predetermine range, the thermoplastic resin composition exhibited excellent mechanical properties, processability, and weather resistance. In addition, low-whitening characteristics were excellent even in a thick sheet. Thus, an aesthetically pleasing appearance was realized. In addition, the thermoplastic resin composition of the present invention was applied to an unpainted molded article, as a specific example, an unpainted sheet. In addition, economics and eco-friendliness were excellent.

**Claims**

1. A thermoplastic resin composition, comprising:

    100 parts by weight of a base resin comprising 46 to 81 % by weight of an alkyl acrylate-aromatic vinyl compound-vinyl cyanide compound graft copolymer (A) containing an alkyl acrylate rubber having an average particle diameter of 50 to 150 nm, and 19 to 54 % by weight of an aromatic vinyl compound-vinyl cyanide compound copolymer (B) comprising 10 % by weight or more and less than 26 % by weight of a vinyl cyanide compound and having a weight average molecular weight of 65,000 to 110,000 g/mol; and
    3 parts by weight or more of a thermoplastic polyester elastomer (C),
    wherein the thermoplastic resin composition has an alkyl acrylate coverage value (X) of 65 % by weight or more as calculated by Equation 1 below.

    $$[\text{Equation } 1]$$

    $$X = \{(G-Y)/Y\} \times 100,$$

    wherein G represents a gel content (wt%) based on a total weight of the thermoplastic resin composition, and Y represents an alkyl acrylate content (wt%) in gel based on a total weight of the thermoplastic resin composition.

2. The thermoplastic resin composition according to claim 1, wherein, based on a total weight thereof, the graft copolymer (A) comprises 20 to 60 % by weight of an alkyl acrylate rubber and 40 to 80 % by weight of an aromatic vinyl compound-vinyl cyanide compound copolymer surrounding the alkyl acrylate rubber.

3.  The thermoplastic resin composition according to claim 1, wherein the graft copolymer (A) has a grafting degree of 60 % or more as calculated by Equation 2 below.

    Grafting degree (%) = [Weight (g) of grafted monomers/Rubber weight (g)] × 100,                    [Equation 2]

    wherein the weight (g) of grafted monomers is obtained by subtracting the rubber weight (g) from a weight of insoluble matter (gel) obtained by dissolving a graft copolymer in acetone and performing centrifugation, and the rubber weight (g) is a weight (g) of rubber components theoretically added to graft copolymer powder.

4.  The thermoplastic resin composition according to claim 1, wherein the thermoplastic polyester elastomer (C) has a melt flow rate of 0.5 to 10 g/10 min as measured at a temperature of 230 °C under a load of 2.16 kg according to ASTM D1238.

5.  The thermoplastic resin composition according to claim 1, wherein the thermoplastic polyester elastomer (C) is an elastomer comprising an aromatic dicarboxylic acid or an ester derivative thereof; an aliphatic diol; and a polyalkylene oxide.

6.  The thermoplastic resin composition according to claim 5, wherein the aromatic dicarboxylic acid comprises one or more selected from the group consisting of terephthalic acid, isophthalic acid, 2,6-naphthalene dicarboxylic acid, 1,5-naphthalene dicarboxylic acid, and 1,4-cyclohexane dicarboxylic acid.

7.  The thermoplastic resin composition according to claim 5, wherein the aliphatic diol comprises one or more selected from the group consisting of ethylene glycol, propylene glycol, 1,2-propanediol, 1,3-propanediol, 1,4-butanediol, 1,5-pentanediol, 1,6-hexanediol, and 1,4-cyclohexanedimethanol.

8.  The thermoplastic resin composition according to claim 5, wherein the polyalkylene oxide comprises one or more selected from the group consisting of polyethylene glycol, polypropylene glycol, polytetramethylene glycol, polyhexamethylene glycol, a copolymer of ethylene oxide and propylene oxide, an ethylene oxide addition polymer of polypropylene glycol, and a copolymer of ethylene oxide and tetrahydrofuran.

9.  The thermoplastic resin composition according to claim 1, wherein, after cupping a central portion of a sheet having a thickness of 0.3 mm at a speed of 10 mm/min to a depth of 8 mm using a 20 mm diameter ball and an electric Erichsen cupping tester, when values before and after cupping are measured using a color difference meter, and a color difference ($\triangle E$) is calculated by Equation 3 below, the thermoplastic resin composition has a color difference ($\triangle E$) of 2.0 or less.

    [Equation 3]

$$\Delta E = \sqrt{(L'-L_0)^2 + (a'-a_0)^2 + (b'-b_0)^2},$$

    wherein L', a', and b' represent L, a, and b values measured using a CIE LAB color coordinate system after cupping, respectively, and $L_0$, $a_0$, and $b_0$ represent L, a, and b values measured using the CIE LAB color coordinate system before cupping.

10. The thermoplastic resin composition according to claim 1, wherein the thermoplastic resin composition has a Rockwell hardness of 44 or more as measured in an R-scale according to ASTM D785.

11. A method of preparing a thermoplastic resin composition, comprising kneading and extruding, at 200 to 300 °C and 100 to 500 rpm, 100 parts by weight of a base resin comprising 46 to 81 % by weight of an alkyl acrylate-aromatic vinyl compound-vinyl cyanide compound graft copolymer (A) containing an alkyl acrylate rubber having an average particle diameter of 50 to 150 nm, and 19 to 54 % by weight of an aromatic vinyl compound-vinyl cyanide compound copolymer (B) comprising 10 % by weight or more and less than 26 % by weight of a vinyl cyanide compound and having a weight average molecular weight of 65,000 to 110,000 g/mol; and 3 parts by weight or more of a thermoplastic polyester elastomer (C),

wherein the thermoplastic resin composition has an alkyl acrylate coverage value (X) of 65 % by weight or more as calculated by Equation 1 below.

[Equation 1]

$$X = \{(G-Y)/Y\} \times 100,$$

wherein G represents a gel content (wt%) based on a total weight of the thermoplastic resin composition, and Y represents an alkyl acrylate content (wt%) in gel based on a total weight of the thermoplastic resin composition.

12. A molded article, comprising the thermoplastic resin composition according to any one of claims 1 to 10.

13. The molded article according to claim 12, wherein the molded article is an unpainted sheet.

[FIG. 1]

Example 1                    Comparative Example 1

## INTERNATIONAL SEARCH REPORT

| International application No. |
|---|
| **PCT/KR2024/013025** |

### A. CLASSIFICATION OF SUBJECT MATTER

**C08L 51/04**(2006.01)i; **C08L 51/00**(2006.01)i; **C08L 25/12**(2006.01)i; **C08L 67/02**(2006.01)i; **C08G 63/672**(2006.01)i; **C08J 5/18**(2006.01)i

According to International Patent Classification (IPC) or to both national classification and IPC

### B. FIELDS SEARCHED

Minimum documentation searched (classification system followed by classification symbols)

C08L 51/04(2006.01); C08F 210/18(2006.01); C08F 212/08(2006.01); C08F 265/06(2006.01); C08K 5/53(2006.01); C08L 23/02(2006.01); C08L 25/12(2006.01); C08L 51/06(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 열가소성 수지(thermoplastic resin), 성형품(molded product), 알킬 아크릴레이트 (alkyl acrylate), 방향족 비닐 화합물(aromatic vinyl compound), 비닐시안 화합물(vinyl cyan compound), 열가소성 폴리에스테르 엘라스토머(thermoplastic polyester elastomer)

### C. DOCUMENTS CONSIDERED TO BE RELEVANT

| Category* | Citation of document, with indication, where appropriate, of the relevant passages | Relevant to claim No. |
|---|---|---|
| Y | KR 10-2022-0106412 A (LG CHEM, LTD.) 29 July 2022 (2022-07-29)<br>See claims 1-4, 10 and 11; and paragraphs [0077] and [0148]. | 1-13 |
| Y | KR 10-2019-0052799 A (LG CHEM, LTD.) 17 May 2019 (2019-05-17)<br>See claims 1, 3 and 10; and paragraphs [0123], [0125], [0130], [0133], [0142] and [0263]. | 1-13 |
| A | KR 10-2022-0057413 A (LG CHEM, LTD.) 09 May 2022 (2022-05-09)<br>See claims 1, 4 and 5; and paragraphs [0095], [0096], [0099], [0102], [0105], [0190] and [0215]. | 1-13 |
| A | KR 10-0782700 B1 (LG CHEM, LTD.) 07 December 2007 (2007-12-07)<br>See paragraphs [0078]-[0082]. | 1-13 |
| A | KR 10-2020-0035667 A (LOTTE CHEMICAL CORPORATION) 06 April 2020 (2020-04-06)<br>See paragraph [0015]. | 1-13 |

☐ Further documents are listed in the continuation of Box C.   ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **09 December 2024** | **09 December 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/013025**

| Patent document cited in search report | | | Publication date (day/month/year) | Patent family member(s) | | | Publication date (day/month/year) |
|---|---|---|---|---|---|---|---|
| KR | 10-2022-0106412 | A | 29 July 2022 | CN | 115119512 | A | 27 September 2022 |
| | | | | EP | 4063455 | A1 | 28 September 2022 |
| | | | | EP | 4063455 | B1 | 18 September 2024 |
| | | | | JP | 2023-514937 | A | 12 April 2023 |
| | | | | JP | 7342274 | B2 | 11 September 2023 |
| | | | | KR | 10-2673708 | B1 | 12 June 2024 |
| | | | | TW | 202237737 | A | 01 October 2022 |
| | | | | US | 2023-0242752 | A1 | 03 August 2023 |
| | | | | WO | 2022-158719 | A1 | 28 July 2022 |
| KR | 10-2019-0052799 | A | 17 May 2019 | CN | 110678517 | A | 10 January 2020 |
| | | | | CN | 110678517 | B | 11 March 2022 |
| | | | | EP | 3613807 | A1 | 26 February 2020 |
| | | | | EP | 3613807 | B1 | 12 October 2022 |
| | | | | JP | 2020-519725 | A | 02 July 2020 |
| | | | | JP | 6909872 | B2 | 28 July 2021 |
| | | | | KR | 10-2161592 | B1 | 05 October 2020 |
| | | | | TW | 201925327 | A | 01 July 2019 |
| | | | | TW | I768148 | B | 21 June 2022 |
| | | | | US | 11401409 | B2 | 02 August 2022 |
| | | | | US | 2020-0165439 | A1 | 28 May 2020 |
| | | | | WO | 2019-093703 | A1 | 16 May 2019 |
| KR | 10-2022-0057413 | A | 09 May 2022 | CN | 114710959 | A | 05 July 2022 |
| | | | | CN | 114710959 | B | 24 May 2024 |
| | | | | EP | 4029915 | A1 | 20 July 2022 |
| | | | | EP | 4029915 | B1 | 17 April 2024 |
| | | | | JP | 2023-505630 | A | 10 February 2023 |
| | | | | JP | 7386983 | B2 | 27 November 2023 |
| | | | | KR | 10-2707172 | B1 | 20 September 2024 |
| | | | | TW | 202216887 | A | 01 May 2022 |
| | | | | US | 2023-0357559 | A1 | 09 November 2023 |
| | | | | WO | 2022-092512 | A1 | 05 May 2022 |
| KR | 10-0782700 | B1 | 07 December 2007 | KR | 10-2007-0047073 | A | 04 May 2007 |
| KR | 10-2020-0035667 | A | 06 April 2020 | KR | 10-2649850 | B1 | 20 March 2024 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230139390
- KR 1020240114660
- KR 20090095764 A